# EUROPEAN PATENT APPLICATION

(11) **EP 3 674 688 A1**
(43) Date of publication of application: **01.07.2020**
(21) Application number: 19207940.8
(22) Date of filing: 08.11.2019
(51) Int. Cl.: G01N 21/31

(54) **METHOD OF INDICATING STATE OF DETECTION INSTRUMENT, AND INSTRUMENT, MEDIUM AND SYSTEM THEREOF**

(30) Priority: 29.12.2018 CN 201811633598
(71) Applicant: Shimadzu Corporation, Kyoto-shi, Kyoto 604-8511 (JP)
(72) Inventor: ZHAO, Congcong, Shanghai, Shanghai 200233 (CN); SUGIHARA, Kazuo, Kyoto-shi, Kyoto 604-8511 (JP)
(74) Representative: Mewburn Ellis LLP

(57) **Abstract**

The present invention relates to the field of a detection instrument, and discloses a method of indicating a state of a detection instrument, and an instrument, a medium and a system thereof. The method of indicating a state of a detection instrument according to the present invention includes determining whether or not an operation error is present in the detection instrument, transmitting an error indicating signal to an error indicator disposed outside the detection instrument if the determination result is that an operation error is present, and transmitting an operation indicating signal to an operation indicator disposed outside the detection instrument if the determination result is that no operation error is present. According to the present invention, different operating states inside the detection instrument may be directly indicated by an indicator disposed outside the detection instrument, which makes it possible to improve the accuracy of the measurement result and ensure the safe use of the instrument.

## Description

### FIELD OF THE INVENTION

The present invention relates to the field of a detection instrument, and more particularly, to a method of indicating a state of a detection instrument, and an instrument, a medium and a system thereof.

### BACKGROUND ART

Generally, an operating state of a detection instrument is displayed on an interface of an operating software. The operating state of the detection instrument can only be confirmed by the characters displayed on the interface of the operating software (for operating the main body of the instrument). For example, an atomic absorption spectrophotometer includes a light source, an atomization system, a spectroscopic system, a detection system, and a computer for running the operating software. The operating state of the detection instrument includes an initialization state, a standby state, a measurement started state, a measurement in progress state and the like. The operating state of the instrument is displayed as characters on the interface of the operating software. Therefore, various errors may occur during the operation of the instrument, if the user does not notice the error on the interface in time, it may affect the measurement result, and may even result in safety problem. For example, depending on different operating conditions of the instrument, sometimes flammable gas may be used in the measurement. In such a case, if a failure or an error is not confirmed in time, an explosion may occur, resulting in safety problem.

### SUMMARY OF THE INVENTION

An object of the present invention is to provide a method of indicating a state of a detection instrument, which makes it possible to directly indicate different operating states inside the detection instrument via an indicator disposed outside the detection instrument, making it possible to improve the accuracy of the measurement result and ensure the safe use of the instrument.

In order to solve the technical problem mentioned above, an embodiment of the present invention discloses a method of indicating a state of a detection instrument. The method includes determining whether or not an operation error is present in the detection instrument; transmitting an error indicating signal to an error indicator disposed outside the detection instrument when the determination result is that an operation error is present; and transmitting an operation indicating signal to an operation indicator disposed outside the detection instrument when the determination result is that no operation error is present.

In an implementation, the method further includes (i) verifying whether or not an operation pretest is performed on the detection instrument before transmitting the operation indicating signal to the operation indicator disposed outside the detection instrument; (ii) transmitting a first operation indicating signal to a first operation indicator disposed outside the detection instrument when the verification result is that the operation pretest is performed on the detection instrument and the determination result is that no operation error is present; and (iii) transmitting a second operation indicating signal to a second operation indicator disposed outside the detection instrument when the verification result is that no operation pretest is performed on the detection instrument and the determination result is that no operation error is present. The first operation indicator and the second operation indicator are configured to indicate different operating states of the detection instrument.

In another implementation, the method further includes (i) determining whether the detection instrument is operating at a first operating mode or a second operating mode before verifying whether or not the operation pretest is performed on the detection instrument; (ii) verifying whether or not the operation pretest is performed on the detection instrument when the determination result is that the detection instrument is operating at the first operating mode; and (iii) transmitting the first operation indicating signal to the first operation indicator disposed outside the detection instrument when the determination result is that the detection instrument is operating at the second operating mode and the determination result is that no operation error is present.

In another implementation, the detection instrument is an atomic absorption spectrophotometer.

In another implementation, the operation error includes an initialization error and/or a system error, the first operating mode is a flame atomic absorption spectrum mode, the second operating mode is a graphite furnace absorption spectrum mode, and the operation pretest is a gas leakage test.

In another implementation, the indicator is configured to indicate different operating states of the detection instrument by means of different characters and/or symbols on a display, lamps of different colors, different sounds, or a combination thereof. An embodiment of the present invention discloses a detection instrument which includes a first determination unit configured to determine whether or not an operation error is present in the detection instrument, an error transmission unit configured to transmit an error indicating signal to an error indicator disposed outside the detection instrument, and an operation transmission unit configured to transmit an operation indicating signal to an operation indicator disposed outside the detection instrument.

In another implementation, the detection instrument further includes a verification unit configured to verify whether or not an operation pretest is performed on the detection instrument, and a second determination unit configured to determine whether the detection instrument is operating at a first operating mode or a second operating mode. The operation transmission unit includes a first transmission subunit configured to transmit a first operation indicating signal to a first operation indicator disposed outside the detection instrument, and a second transmission subunit configured to transmit a second operation indicating signal to a second operation indicator disposed outside the detection instrument.

In another implementation, the detection instrument is an atomic absorption spectrophotometer, the operation error includes an initialization error and/or a system error, the first operating mode is a flame atomic absorption spectrum mode, the second operating mode is a graphite furnace absorption spectrum mode, and the operation pretest is a gas leakage test.

In another implementation, the indicator is configured to indicate different operating states of the detection instrument by means of different characters and/or symbols on a display, lamps of different colors or different sounds, or a combination thereof.

An embodiment of the present invention further discloses a machine readable medium that stores instructions that, when executed by the machine, cause the machine to execute the method of indicating a state of a detection instrument according to any one of claims 1 to 6.

An embodiment of the present invention further discloses a system. The system includes a controller configured to execute the method of indicating a state of a detection instrument according to any one of claims 1 to 6, and a memory configured to store instructions to be executed by controller.

The present invention is mainly different from the prior art in that different operating states inside the detection instrument may be directly indicated by an indicator disposed outside the detection instrument, which assists the user to make quick observation and judgement, making it possible to improve the accuracy of the measurement result and ensure the safe use of the instrument.

### BRIEF DESCRIPTION OF THE DRAWINGS

Fig. 1 is a flow chart illustrating a method of indicating a state of a detection instrument according to a first embodiment of the present invention;
Fig. 2 is a flow chart illustrating a method of indicating a state of a detection instrument according to a second embodiment of the present invention;
Fig. 3 is a view illustrating an example indicator for indicating a state according to the present invention;
Fig. 4 is a view illustrating an example indicator for indicating a state according to the present invention;
Fig. 5 is a flow chart illustrating a method of indicating a state of an atomic spectrophotometer in the initialization stage according to a third embodiment of the present invention;
Fig. 6 is a flow chart illustrating the method of indicating a state of the atomic spectrophotometer in the measurement stage according to the third embodiment of the present invention;
Fig. 7 is a diagram schematically illustrating the structure of a detection instrument according to a fourth embodiment of the present invention; and
Fig. 8 is a diagram schematically illustrating the structure of a detection instrument according to a fifth embodiment of the present invention.

### DESCRIPTION OF THE PREFERRED EMBODIMENTS

In the following description, in order to make the reader better understand the present application, many technical details have been presented. However, it should be noted that even without these technical details, those skilled in the art could implement the technical solution claimed by each claim of the present application by making various changes and modifications according to the following embodiments.

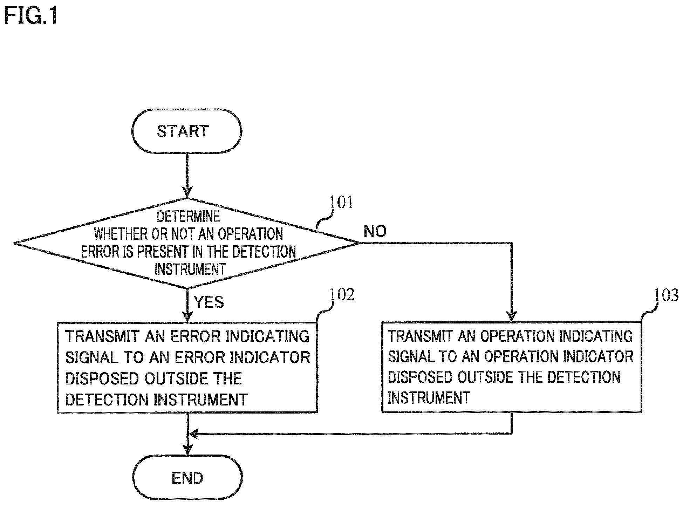

In order to clarify the objects, the technical solutions and the advantages of the present invention, the embodiments of the present invention will be described below in more detail with reference to the drawings. A first embodiment of the present invention relates to a method of indicating a state of a detection instrument. Fig. 1 is a flow chart illustrating the method of indicating a state of the detection instrument.

Specifically, as illustrated in Fig. 1, the method of indicating a state of the detection instrument includes the following steps.

In step 101, whether or not an operation error is present in the detection instrument is determined.

It should be noted that the operation error in the present invention refers to any of various errors that may occur during use and prevent the detection instrument from operating normally, for example, an initialization error that occurs during the initialization or a system error that occurs during each operation stage such as instrument vibration or an abnormal level of a solution to be measured.

If the determination result is "Yes", the procedure proceeds to step 102; otherwise, the procedure proceeds to step 103.

In step 102, an error indicating signal is transmitted to an error indicator disposed outside the detection instrument. Thereafter, the procedure is terminated.

In step 103, an operation indicating signal is transmitted to an operation indicator disposed outside the detection instrument. Thereafter, the procedure is terminated.

It should be noted that in each embodiment of the present invention, the error indicator and the operation indicator may be different units or the same unit. For example, the error indicator and the operation indicator may be lamps of different colors (for example, red and green). Alternatively, the error indicator and the operation indicator may be the same lamp which is turned on in different colors when an error indicating signal and an operation indicating signal are received. Furthermore, the error indicator and the operation indicator may be the same audio unit which is configured to play different voices when receiving different indicating signals, such as "there occurs an initialization error", "there occurs a system error", "the system is operating normally" or the like. It should be noted that the indicator is intended to transmit different information to the user, and as long as such information is transmitted, the indicator is not limited to those mentioned in the present invention and any type of indicator may be used in the present invention.

Thus, different operating states inside the detection instrument may be directly indicated by an indicator disposed outside the detection instrument, which assists the user to make quick observation and judgement, making it possible to improve the accuracy of the measurement result and ensure the safe use of the instrument.

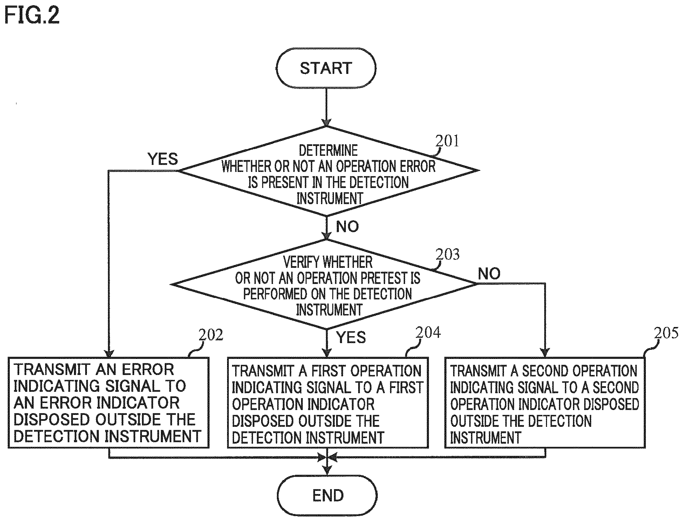

A second embodiment of the present invention relates to a method of indicating a state of a detection instrument. Fig. 2 is a flow chart illustrating the method of indicating a state of the detection instrument.

Specifically, as illustrated in Fig. 2, the method includes the following steps.

In step 201, whether or not an operation error is present in the detection instrument is determined.

If the determination result is "Yes", the procedure proceeds to step 202; otherwise, the procedure proceeds to step 203.

In step 202, an error indicating signal is transmitted to an error indicator disposed outside the detection instrument. Thereafter, the procedure is terminated.

In step 203, whether or not an operation pretest is performed on the detection instrument is verified. It should be noted that in each embodiment of the present invention, the operation pretest refers to a test performed before the detection instrument is used to perform any measurement, such as a gas leakage test, a position test of optical elements in an optical measurement instrument or the like.

If the verification result is "Yes", the procedure proceeds to step 204; otherwise, the procedure proceeds to step 205.

In step 204, a first operation indicating signal is transmitted to a first operation indicator disposed outside the detection instrument. Thereafter, the procedure is terminated.

In step 205, a second operation indicating signal is transmitted to a second operation indicator disposed outside the detection instrument. Thereafter, the procedure is terminated.

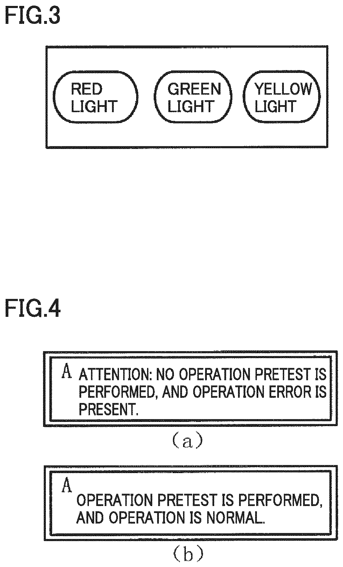

It should be noted that in the present invention, the error indicator, the first operation indicator and the second operation indicator may be different units or may be the same unit capable of performing different indications. For example, as illustrated in Fig. 3, three lamps of different colors are disposed outside the detection instrument, and the three lamps have three different kinds of colors of red, yellow and green, respectively. The red lamp is used as the error indicator, the green lamp is used as the first operation indicator, and the yellow lamp is used as the second operation indicator. The red lamp is turned on or is made to blink when an error indicating signal is received. Similarly, the green lamp or the yellow lamp is turned on or is made to blink when a respective operation indicating signal is received.

Further, as illustrated in Figs. 4(a) and 4(b), the indicator may be an actual integral unit such as a display A which is configured to display characters or symbols when different indicating signals are received.

Furthermore, the indicator may be an audio unit which is configured to play different voices when receiving different indicating signals, such as "there occurs an initialization error", "there occurs a system error", "the system is operating normally", "no operation pretest is performed" or the like.

In addition, the indicator may be a combination of those mentioned in the above. For example, when an operation error occurs, a message indicating the occurrence of the operation error is displayed on the display, and meanwhile the red lamp is made to blink.

Thus, different operating states inside the detection instrument may be directly indicated by an indicator disposed outside the detection instrument, which assists the user to make quick observation and judgement, making it possible to improve the accuracy of the measurement result and ensure the safe use of the instrument.

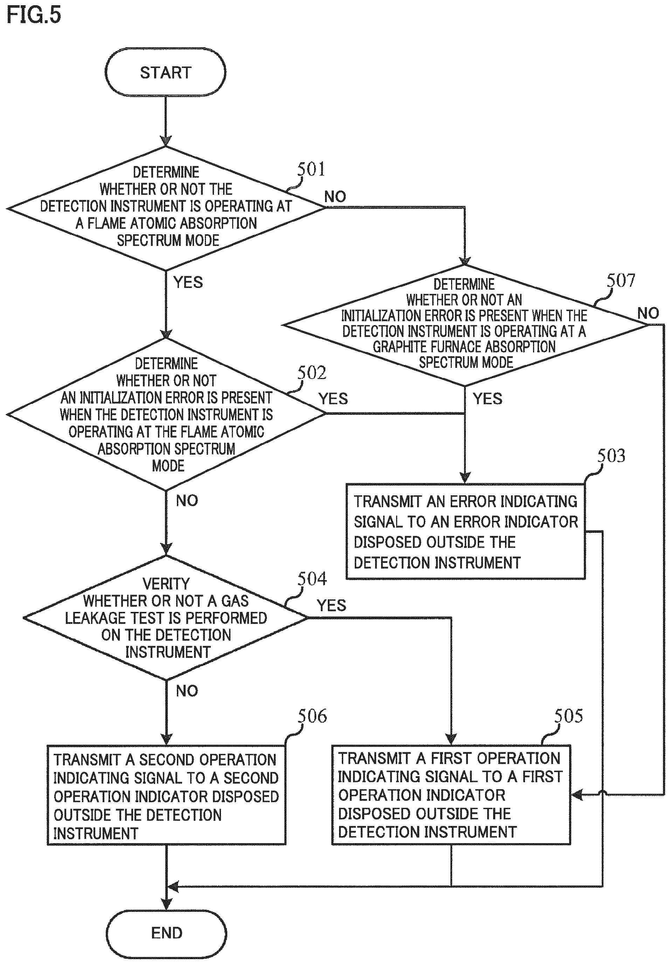

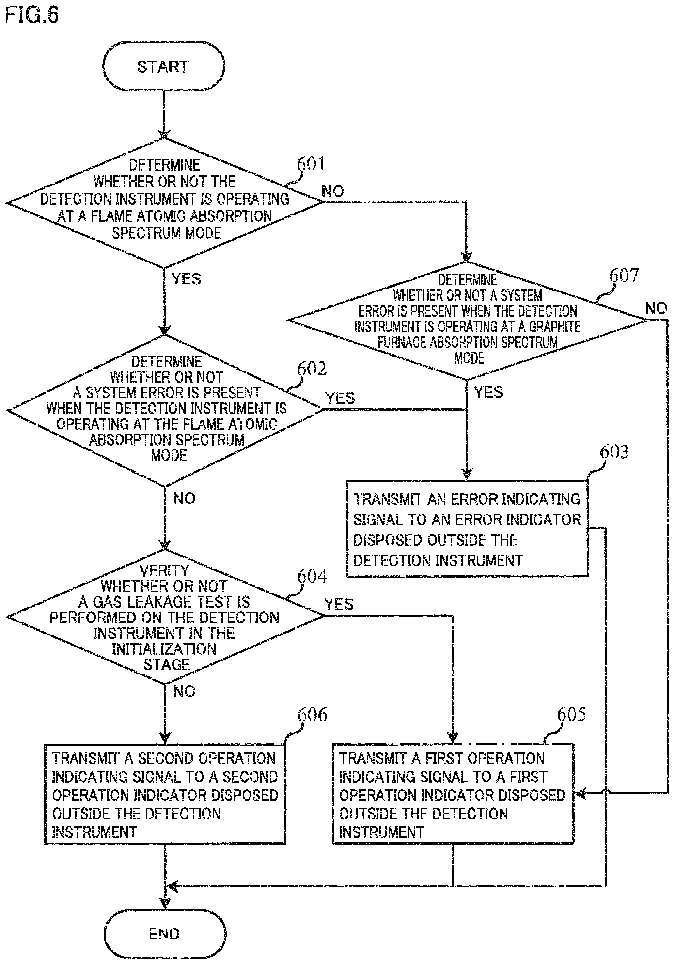

A third embodiment of the present invention relates to a method of indicating a state of a detection instrument. Fig. 5 and Fig. 6 each is a flow chart illustrating the method of indicating a state of the detection instrument. In the present embodiment, the detection instrument is an atomic spectrophotometer. The atomic spectrophotometer includes a flame atomic absorption spectrum mode (that is, a first operating mode) and a graphite furnace absorption spectrum mode (that is, a second operating mode), and the operation pretest is a gas leakage test.

Fig. 5 illustrates the method of indicating a state of the atomic spectrophotometer in the initialization stage. Specifically, in the initialization stage, the operation error is an initialization error. As illustrated in Fig. 5, the method includes the following steps.

In step 501, whether or not the detection instrument is operating at the flame atomic absorption spectrum mode is determined.

If the determination result is "Yes", the procedure proceeds to step 502; otherwise, the procedure proceeds to step 507.

In step 502, whether or not an initialization error is present when the detection instrument is operating at the flame atomic absorption spectrum mode is determined.

If the determination result is "Yes", the procedure proceeds to step 503; otherwise, the procedure proceeds to step 504.

In step 503, an error indicating signal is transmitted to an error indicator disposed outside the detection instrument. Thereafter, the procedure is terminated.

In step 504, whether or not a gas leakage test is performed on the detection instrument is verified.

If the determination result is "Yes", the procedure proceeds to step 505; otherwise, the procedure proceeds to step 506.

In step 505, a first operation indicating signal is transmitted to a first operation indicator disposed outside the detection instrument. Thereafter, the procedure is terminated.

In step 506, a second operation indicating signal is transmitted to a second operation indicator disposed outside the detection instrument. Thereafter, the procedure is terminated.

In step 507, whether or not an initialization error is present when the detection instrument is operating at the graphite furnace absorption spectrum mode is determined.

If the determination result is "Yes", the procedure proceeds to step 503; otherwise, the procedure proceeds to step 505.

Fig. 6 illustrates the method of indicating a state of the atomic spectrophotometer in the measurement stage. Specifically, in the measurement stage, the operation error is a system error. As illustrated in Fig. 6, the method includes the following steps.

In step 601, whether or not the detection instrument is operating at the flame atomic absorption spectrum mode is determined.

If the determination result is "Yes", the procedure proceeds to step 602; otherwise, the procedure proceeds to step 607.

In step 602, whether or not a system error is present when the detection instrument is operating at the flame atomic absorption spectrum mode is determined.

If the determination result is "Yes", the procedure proceeds to step 603; otherwise, it means that the measurement is available, and the procedure proceeds to step 604.

In step 603, an error indicating signal is transmitted to an error indicator disposed outside the detection instrument. Thereafter, the procedure is terminated.

In step 604, whether or not a gas leakage test is performed on the detection instrument in the initialization stage is determined.

If the determination result is "Yes", the procedure proceeds to step 605; otherwise, the procedure proceeds to step 606.

In step 605, a first operation indicating signal is transmitted to the first operation indicator disposed outside the detection instrument. Thereafter, the procedure is terminated.

In step 606, a second operation indicating signal is transmitted to the second operation indicator disposed outside the detection instrument. Thereafter, the procedure is terminated.

In step 607, whether or not a system error is present when the detection instrument is operating at the graphite furnace absorption spectrum mode is determined.

If the determination result is "Yes", the procedure proceeds to step 603; otherwise, it means that the measurement is available, and the procedure proceeds to step 605.

It should be noted that in the present embodiment, after the steps mentioned above are completed, when the detection instrument enters the measuring state and starts to measure a sample, a measurement indicating signal may be transmitted to a third operation indicator, indicating that the instrument is in the measuring stage.

It should be noted that an initialization error refers to such an error that occurs during the initialization which prevents the initialization from being completed, and a system error refers to instrument vibration or an abnormal level of a solution to be measured.

Each indicator in the present embodiment may be configured in the same manner as that in first embodiment and the second embodiment.

Thus, different operating states inside the detection instrument may be directly indicated by an indicator disposed outside the detection instrument, which assists the user to make quick observation and judgement, making it possible to improve the accuracy of the measurement result and ensure the safe use of the instrument.

Further, it should be noted that the detection instrument in the present invention is not limited to the atomic absorption spectrophotometer, it may be any other detection instrument.

The method described in each embodiment of the present invention may be implemented by software, hardware, firmware or the like. Regardless of whether the present invention is implemented by software, hardware or firmware, instruction codes may be stored in any type of computer-accessible memory (such as a permanent or modifiable memory, a volatile or non-volatile memory, a solid state or non-solid state memory, a fixed or replaceable medium). Similarly, the memory may be, for example, a programmable array logic (abbreviated as "PAL"), a random access memory (abbreviated as "RAM"), a programmable read-only memory (abbreviated as "PROM"), a read-only memory (abbreviated as "ROM"), an electrically erasable programmable read-only memory (abbreviated as "EEPROM"), a magnetic disk , an optical disc, a digital video disc (abbreviated as "DVD") or the like.

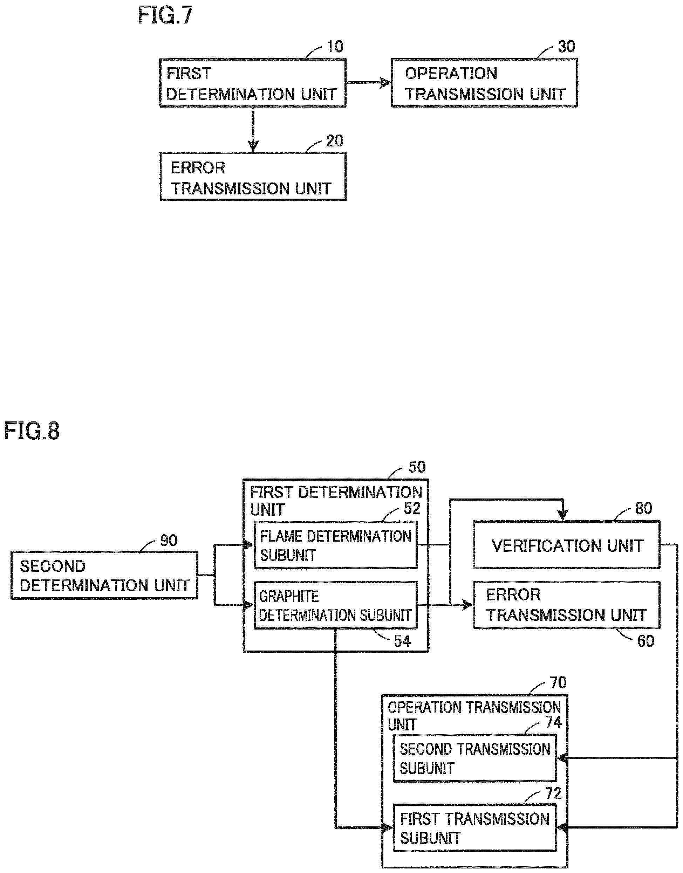

A fourth embodiment of the present invention relates to a detection instrument. Fig. 7 is a diagram schematically illustrating the structure of the detection instrument.

Specifically, as illustrated in Fig. 7, the detection instrument includes a first determination unit 10 configured to determine whether or not an operation error is present in the detection instrument, an error transmission unit 20 configured to transmit an error indicating signal to an error indicator disposed outside the detection instrument if the determination result by first determination unit 10 is "Yes", and an operation transmission unit 30 configured to transmit an operation indicating signal to an operation indicator disposed outside the detection instrument if the determination result by first determination unit 10 is "No".

It should be noted that the operation error in the present invention refers to any of various errors that may occur during use and prevent the detection instrument from operating normally, for example, an initialization error that occurs during the initialization or a system error that occurs during each operation stage such as instrument vibration or abnormal solution level.

Thus, different operating states inside the detection instrument may be directly indicated by an indicator disposed outside the detection instrument, which assists the user to make quick observation and judgement, making it possible to improve the accuracy of the measurement result and ensure the safe use of the instrument.

The first embodiment relating to a method corresponds to the present embodiment, and the present embodiment may be carried out in combination with the first embodiment. The related technical details mentioned in the first embodiment may be applied to the present embodiment, and the description thereof will not be repeated. Accordingly, the related technical details mentioned in the present embodiment may be applied to the first embodiment.

A fifth embodiment of the present invention relates to a detection instrument. Fig. 8 is a diagram schematically illustrating the structure of the detection instrument. In the present embodiment, the detection instrument is an atomic absorption spectrophotometer, the operation error includes an initialization error and/or a system error, the first operating mode is a flame atomic absorption spectrum mode, the second operating mode is a graphite furnace absorption spectrum mode, and the operation pretest is a gas leakage test.

Specifically, as illustrated in Fig. 8, the detection instrument includes: a first determination unit 50 configured to determine whether or not an operation error is present in the detection instrument; an error transmission unit 60 configured to transmit an error indicating signal to an error indicator disposed outside the detection instrument if the determination result by first determination unit 50 is "Yes"; an operation transmission unit 70 configured to transmit an operation indicating signal to an operation indicator disposed outside the detection instrument if the determination result by first determination unit 50 is "No"; a verification unit 80 configured to verify whether or not an operation pretest is performed on the detection instrument; and a second determination unit 90 configured to determine whether or not the detection instrument is operating at the flame atomic absorption spectrum mode.

Operation transmission unit 70 includes a first transmission subunit 72 configured to transmit a first operation indicating signal to a first operation indicator disposed outside the detection instrument if the determination result by first determination unit 50 is "No" and the verification result by verification unit 80 is "Yes", and a second transmission subunit 74 configured to transmit a second operation indicating signal to a second operation indicator disposed outside the detection instrument if the determination result by first determination unit 50 is "No" and the verification result by verification unit 80 is "No".

First determination unit 50 includes a frame determination subunit 52 configured to determine whether or not an operation error is present when the detection instrument is operating at the frame atomic absorption spectrum mode, and a graphite determination subunit 54 configured to determine whether or not an operation error is present when the detection instrument is operating at the graphite furnace absorption spectrum mode.

It should be noted that in the present invention, the indicator is preferably configured to indicate different operating states of the detection instrument by means of different characters and/or symbols on a display, lamps of different colors, different sounds, or a combination thereof.

The third embodiment relating to a method corresponds to the present embodiment, and the present embodiment may be carried out in combination with the third embodiment. The related technical details mentioned in the third embodiment may be applied to the present embodiment, and the description thereof will not be repeated. Accordingly, the related technical details mentioned in the present embodiment may be applied to the third embodiment.

A sixth embodiment of the present invention discloses a machine readable medium that stores instructions that, when executed by the machine, cause the machine to execute the method of indicating a state of the detection instrument disclosed in any one of the first to third embodiments.

A seventh embodiment of the present invention discloses a system. The system includes a memory for storing instructions to be executed by one or more controllers of the system, and a controller which is one of the controllers of the system and configured to execute the method of indicating a state of a detection instrument disclosed in any one of the first to third embodiments.

It is understood that the controller in the present invention may be any device that may be applied to the detection instrument so as to execute the instructions, such as a central processor (CPU), a micro control unit (MCU), a digital signal processor (DSP), or a programmable logic controller (PLC).

It should be noted that each unit or module mentioned in the embodiment of each device of the present invention is a logic unit or module. A logic unit or module may be a single physical unit or module, or a part of a single physical unit or module, or a combination of a plurality of physical units or modules. The physical implementation of these logic units or modules per se is not the most important, what is important is the combination of the functions implemented by these logic units or modules, which is the technical problem to be solved by the present invention. Further, in order to emphasize the innovation part of the present invention, some units or modules that are not closely related to the technical problem to be solved by the present invention are not described in the above-described embodiments of the present invention, but those units or modules may be included in the present invention where necessary.

It should be noted that in the claims and the specification, the terms such as "first" and "second" are merely used to distinguish one entity or operation from another entity or operation, without necessarily requiring or implying that an actual relationship or sequence is present between these entities or operations. Moreover, the terms of "comprising", "including" or any other variant thereof is non-exclusive, whereby a process, a method, an article or a device that includes a plurality of elements includes not only the elements mentioned but also those elements not explicitly listed or elements intrinsic to such process, method, article or device. Unless otherwise specified, an element defined with the phrase "including one" does not exclude the possibility that the process, method, article or device that includes the element may include another identical element.

While the invention has been illustrated and described with reference to certain preferred embodiments, it is apparent to those skilled in the art that various modifications may be made formally or substantially without departing from the spirit or scope of the invention.

## Claims

1. A method of indicating a state of a detection instrument, the method comprising:
determining whether or not an operation error is present in the detection instrument;
transmitting an error indicating signal to an error indicator disposed outside the detection instrument when the determination result is that an operation error is present; and
transmitting an operation indicating signal to an operation indicator disposed outside the detection instrument when the determination result is that no operation error is present.

2. The method according to claim 1, further comprising:
verifying whether or not an operation pretest is performed on the detection instrument before transmitting the operation indicating signal to the operation indicator disposed outside the detection instrument;
transmitting a first operation indicating signal to a first operation indicator disposed outside the detection instrument when the verification result is that the operation pretest is performed on the detection instrument and the determination result is that no operation error is present; and
transmitting a second operation indicating signal to a second operation indicator disposed outside the detection instrument when the verification result is that no operation pretest is performed on the detection instrument and the determination result is that no operation error is present,
the first operation indicator and the second operation indicator are configured to indicate different operating states of the detection instrument.

3. The method according to claim 2, further comprising:
determining whether the detection instrument is operating at a first operating mode or a second operating mode before verifying whether or not the operation pretest is performed on the detection instrument;
verifying whether or not the operation pretest is performed on the detection instrument when the determination result is that the detection instrument is operating at the first operating mode; and
transmitting the first operation indicating signal to the first operation indicator disposed outside the detection instrument when the determination result is that the detection instrument is operating at the second operating mode and the determination result is that no operation error is present.

4. The method according to claim 3, wherein
the detection instrument is an atomic absorption spectrophotometer.

5. The method according to claim 4, wherein
the operation error includes an initialization error and/or a system error,
the first operating mode is a flame atomic absorption spectrum mode,
the second operating mode is a graphite furnace absorption spectrum mode, and
the operation pretest is a gas leakage test.

6. The method according to any one of claims 1 to 5, wherein
the indicator is configured to indicate different operating states of the detection instrument by means of different characters and/or symbols on a display, lamps of different colors, different sounds, or a combination thereof.

7. A detection instrument comprising:
a first determination unit configured to determine whether or not an operation error is present in the detection instrument;
an error transmission unit configured to transmit an error indicating signal to an error indicator disposed outside the detection instrument; and
an operation transmission unit configured to transmit an operation indicating signal to an operation indicator disposed outside the detection instrument.

8. The detection instrument according to claim 7, further comprising:
a verification unit configured to verify whether or not an operation pretest is performed on the detection instrument; and
a second determination unit configured to determine whether the detection instrument is operating at a first operating mode or a second operating mode,
the operation transmission unit includes:
a first transmission subunit configured to transmit a first operation indicating signal to a first operation indicator disposed outside the detection instrument; and
a second transmission subunit configured to transmit a second operation indicating signal to a second operation indicator disposed outside the detection instrument.

9. The detection instrument according to claim 8, wherein
the detection instrument is an atomic absorption spectrophotometer,
the operation error includes an initialization error and/or a system error,
the first operating mode is a flame atomic absorption spectrum mode,
the second operating mode is a graphite furnace absorption spectrum mode, and
the operation pretest is a gas leakage test.

10. The detection instrument according to any one of claims 7 to 9, wherein
the indicator is configured to indicate different operating states of the detection instrument by means of different characters and/or symbols on a display, lamps of different colors or different sounds, or a combination thereof.

11. A machine readable medium that stores instructions which, when executed by the machine, cause the machine to execute the method of indicating a state of a detection instrument according to any one of claims 1 to 6.

12. A system comprising:
a controller configured to execute the method of indicating a state of a detection instrument according to any one of claims 1 to 6; and
a memory configured to store instructions to be executed by the controller.
